# FASCICULE DE BREVET EUROPEEN

(11) **EP 1 813 882 B1**
(45) Date de publication et mention de la délivrance du brevet: **24.08.2016**
(21) Numéro de dépôt: 07101303.1
(22) Date de dépôt: 29.01.2007
(51) Int. Cl.: F24H 8/00, F28D 7/02

(54) **Echangeur de chaleur à condensation**
Brennwertwärmetauscher
Condensing heat exchanger

(30) Priorité: 30.01.2006 FR 0600808
(43) Date de publication de la demande: 01.08.2007
(73) Titulaire: SERMETA, 29600 Morlaix (FR)
(72) Inventeur: Le Mer, Joseph, 29252 Plouezoch (FR)
(74) Mandataire: Regimbeau

(56) Documents cités:
- EP-A- 1 039 246
- EP-A- 1 243 867
- EP-A- 1 279 903
- EP-A- 1 344 994
- EP-A- 1 398 580
- WO-A-94/16272
- WO-A-2005/028966
- WO-A-2005/080900
- DE-A1- 10 002 894
- DE-C1- 10 026 548
- DE-U1- 29 906 481
- US-A- 5 687 678

## Description

La présente invention concerne un échangeur de chaleur à condensation.

Elle concerne plus précisément un échangeur de chaleur à condensation, qui comporte un tube réalisé dans un métal thermiquement bon conducteur et enroulé en hélice, disposé à l'intérieur d'une enveloppe étanche aux gaz, et dont les spires sont légèrement écartées l'une de l'autre d'un interstice de faible largeur, ce tube étant parcouru par un fluide à réchauffer, tel que de l'eau notamment.

Dans ce type d'échangeur, un brûleur (à fuel ou à gaz) est adapté pour générer des gaz chauds à l'intérieur de l'enroulement hélicoïdal formé par ledit tube de telle sorte que ceux-ci traversent les interstices inter-spires de l'intérieur vers l'extérieur, de manière à réchauffer le fluide circulant dans le tube.

Les gaz refroidis, qui ont traversé les spires, sont évacués via une manchette appropriée dont est munie l'enveloppe.

Dans l'échangeur décrit dans le document WO 94/16272, le tube a une section ovalisée, de sorte que deux spires voisines de l'enroulement sont en regard par des faces planes qui déterminent un interstice de hauteur constante et de valeur relativement faible par rapport à l'épaisseur du tube.

Un tel agencement confère à l'échangeur un excellent rendement, avec, en outre, une compacité remarquable.

Il nécessite toutefois la mise en oeuvre d'un procédé de fabrication relativement délicat à mettre en oeuvre, notamment par hydroformage des tubes à pression très élevée et à l'aide d'un outillage sophistiqué. De plus, il oblige à faire usage d'un tube en métal ayant des caractéristiques mécaniques élevées, en particulier sur le plan de son élasticité et de sa résistance à la traction, tel que l'acier inoxydable, un tel métal étant coûteux par rapport à d'autres métaux qui sont moins nobles tout en étant bon conducteurs thermiques, tels que l'aluminium ou certains alliages à base de cuivre ou d'aluminium.

Diverses réalisations similaires ou voisines, à tube de section aplatie et/ou oblongue, ont déjà été proposées, par exemple dans les documents DE 100 26 548, EP 1 039 246, EP 1 243 867, EP 1 344 994, EP 1 398 580, DE 100 02 894 et WO 2005/028966.

Il est bien sûr possible d'utiliser un enroulement dont le tube présente une section circulaire, ce qui peut être intéressant du fait que la fabrication d'un tel enroulement à partir d'un tube rectiligne est une opération relativement simple et est applicable à des métaux moins nobles et moins coûteux que l'acier inoxydable.

Malheureusement, l'échange thermique qui s'opère alors entre les gaz chauds et le tube est mauvais, du fait que ces gaz ne lèchent réellement que des surfaces de tube d'aire limitée, au niveau des interstices entre spires. Les zones interne (tournée vers le brûleur) et externe du tube ne sont pas directement exposées à l'action de ces gaz, qui les contournent.

Un échangeur à condensation équipé d'un tel enroulement « à tube rond » est donc peu performant.

Pour pallier ce problème, il a été proposé de prévoir plusieurs enroulements tubulaires concentriques.

L'état de la technique en la matière peut être illustré par les documents WO 2005/080900, EP 1 279 903, US 5 687 678 et DE 299 06 481 U.

La demande internationale WO 2005/080900 a pour objet un échangeur de chaleur à condensation du genre exposé plus haut, qui comporte trois enroulements tubulaires coaxiaux formés chacun d'un tube rond enroulé en spirale. L'ensemble est disposé dans une enveloppe, et un brûleur est monté au centre de l'enroulement intérieur, de plus faible diamètre.

Il est à noter, comme on le constate du reste à la simple observation des dessins, que l'enroulement extérieur possède un diamètre notablement plus grand que l'enroulement intermédiaire, lequel possède un diamètre notablement plus grand que l'enroulement intérieur. Il se pose donc un problème d'encombrement radial important.

Du fait du triplement des enroulements, le rendement global de cet échangeur est automatiquement meilleur que celui qui serait doté d'un seul enroulement similaire, car les gaz chauds issus du brûleur sont refroidis successivement à trois reprises. Cependant, au niveau de chaque enroulements, l'échange thermique demeure mauvais car dans cette réalisation, les gaz ne lèchent réellement non plus que des surfaces de tube d'aire limitée, au niveau des interstices entre spires. On remarquera en outre que les trois tubes ont des diamètres différents, décroissant de l'intérieur vers l'extérieur.

La demande de brevet européen 1 279 903 a pour objet un échangeur de conception voisine de celle du précédent, dans lequel cependant un tube unique est conformé de manière à comporter trois enroulements concentriques ; les diamètres de ces trois enroulements sont notablement différents, de sorte qu'on retrouve dans cet échangeur connu le problème d'encombrement radial évoqué plus haut. De plus, en raison de sa configuration, découlant de l'enroulement multiple d'un tube unique, le pas de l'enroulement intermédiaire a un sens contraire de celui des enroulements interne et externe. Il en résulte une distribution irrégulière et des pertes de charge non maîtrisées à travers le triple enroulement, qui nuisent également à la qualité de l'échange thermique finalement obtenu.

Les échangeurs de chaleur décrits dans le brevet américain 5 687 678 et dans le modèle d'utilité allemand 299 06 481 comportent, tous deux, une paire d'enroulements coaxiaux de tubes « ronds » -c'est-à-dire de section circulaire-.

Le tube extérieur possède un pas égal à celui du tube intérieur, et un diamètre d'enroulement légèrement supérieur à celui de ce dernier, et il est disposé concentriquement autour de l'enroulement intérieur, mais avec un décalage d'un demi pas en direction axiale.

Les deux tubes ont le même diamètre.

En raison de cette disposition, la zone interne du tube extérieur se trouve en regard de l'interstice de l'enroulement intérieur si bien qu'elle est léchée par les gaz chauds qui le traverse, ce qui accroît sensiblement la qualité de l'échange thermique. Selon le US 5 687 678, celle-ci est encore améliorée grâce à la présence de déflecteurs à l'extérieur de ce double enroulement, si bien que la quasi-totalité de la surface du tube extérieur est léchée par les gaz qui ont déjà traversé l'enroulement intérieur.

Toujours selon le US 5 687 678, les tubes sont pourvus d'ailettes annulaires, destinées à améliorer encore la captation et le transfert de chaleur, et qui de surcroît, venant en butée les unes contre les autres, déterminent et calibrent les sections de passage des gaz (à la manière d'entretoises).

Dans ces deux réalisations connues, l'encombrement radial de l'échangeur demeure limité, du fait de la faible différence de diamètre des deux enroulements, qui sont en quelque sorte imbriqués l'un dans l'autre.

La présente invention a pour objectif d'optimiser les performances de ce genre d'échangeur, en jouant sur les valeurs des sections minimales des différents passages offerts aux gaz chauds, de l'intérieur vers l'extérieur des enroulements tubulaires à travers leurs interstices et à travers les espaces séparant deux tubes voisins, de telle sorte que la vitesse de ces gaz demeure constante, ou approximativement constante, durant leur trajet depuis le brûleur jusqu'à l'espace périphérique extérieur aux enroulements, et ce malgré l'abaissement progressif de température -et corrélativement la diminution de volume- desdits gaz.

L'échangeur de chaleur à condensation qui fait l'objet de l'invention comporte un premier tube de section circulaire, ou très légèrement ovalisé, enroulé en hélice disposé à l'intérieur d'une enveloppe étanche aux gaz, et dont les spires sont légèrement écartées l'une de l'autre d'un interstice de faible largeur -désignée **a1** par la suite-, ce tube étant parcouru par un fluide à réchauffer, tel que de l'eau notamment, un brûleur étant adapté pour générer des gaz chauds à l'intérieur de ce tube hélicoïdal de telle sorte qu'ils traversent ces interstices de l'intérieur vers l'extérieur, de manière à réchauffer le fluide circulant dans le tube.

Cet échangeur comprend en outre, comme les dispositifs décrits dans les documents US 5 687 678 et DE 299 06 481 U, considérés comme représentatifs de l'état de la technique le plus proche de l'invention, au moins un deuxième tube de section circulaire, ou légèrement ovalisée, enroulé en hélice, et également parcouru par un fluide à réchauffer, dont le pas est égal à celui du premier tube, mais dont le diamètre d'enroulement est supérieur à celui du premier tube, l'enroulement hélicoïdal que constitue ce deuxième tube étant disposé concentriquement autour de l'enroulement hélicoïdal que constitue le premier tube, mais avec un décalage d'un demi pas en direction axiale, ces tubes étant réalisés dans un métal thermiquement bon conducteur, et ladite enveloppe étant munie d'une manchette d'évacuation des gaz refroidis qui ont traversé les spires de chaque enroulement.

Conformément à la présente invention, lesdits tubes ont une configuration telle que :
- l'écartement minimal b entre les deux tubes est constant, de valeur inférieure ou égale à la moitié de **a1 ;**
- la largeur **a2** de l'interstice séparant les spires du deuxième tube est égale à **2b,** ou inférieure à cette valeur.

De manière particulièrement avantageuse, l'écartement **b** a une valeur légèrement inférieure à la moitié de **a1,** et légèrement supérieure à la moitié de **a2**.

On comprend que cette diminution de la section de passage des gaz, concomitante avec la diminution de leur volume (liée à leur refroidissement) assure un transfert amélioré des calories qu'ils transportent avec le milieu environnant, à savoir les tubes parcourus par le fluide à réchauffer.

Selon d'autres caractéristiques avantageuses et non limitatives de l'invention :
- les valeurs des interstices **a1** et **a2** et de l'écartement **b** sont déterminées de telle façon que la vitesse de passage des gaz soit sensiblement constante dans les zones de passage de section réduite, entre les spires du premier tube, dans l'intervalle séparant les deux tubes, puis entre les spires du deuxième tube, malgré l'abaissement de température qu'ils subissent en traversant le double enroulement de tubes, de l'intérieur vers l'extérieur ;
- l'échangeur comporte au moins un troisième tube de section circulaire ou légèrement ovalisée, enroulé en hélice et également parcouru par un fluide à réchauffer, dont le pas est égal à celui des premiers et second tubes, mais dont le diamètre d'enroulement est légèrement supérieur à celui du second tube, l'enroulement hélicoïdal que constitue ce troisième tube étant disposé concentriquement autour de l'enroulement hélicoïdal que constitue le deuxième tube, mais avec un décalage d'un demi pas en direction axiale par rapport à celui-ci, l'écartement minimal c entre les deuxième et troisième tubes étant constant, de valeur égale ou inférieure à la moitié de **a2,** tandis que la largeur **a3** de l'interstice séparant les spires du troisième tube est égale à **2c ,** ou inférieure à cette valeur;
- les valeurs des interstices **a2** et **a3** et de l'écartement **c** susmentionnés sont déterminées de telle façon que la vitesse de passage des gaz soit sensiblement constant dans les zones de passage de section réduite, entre les spires du deuxième tube, dans l'intervalle séparant les deuxième et troisième tubes, puis entre les spires du troisième tube, malgré l'abaissement de température qu'ils subissent en traversant les enroulements de tubes, de l'intérieur vers l'extérieur.
- l'échangeur comporte des moyens de calibrage aptes à maintenir constants et à des valeurs prédéfinies les interstices entre les spires d'un même tube et les espaces minimaux entre deux tubes voisins ;
- lesdits moyens de calibrage sont des bossages emboutis dans la paroi des tubes et faisant saillie vers l'extérieur ;
- chaque tube est pourvu d'au moins deux séries de bossages régulièrement répartis sur toute leur longueur, l'une des séries de bossages étant adaptée pour calibrer l'écartement entre ses spires, et l'autre pour calibrer son espacement par rapport à un tube voisin ;
- lesdits bossages ont la forme d'une calotte sphérique apte à venir en contact quasi ponctuel contre la paroi externe d'une spire adjacente ou d'un tube voisin ;
- les tubes constitutifs des différents enroulements servent à transporter un même fluide (de l'eau par exemple), et sont raccordés les uns aux autres via des tubulures coudées, et sont branchées en série, le fluide à réchauffer entrant dans le tube extérieur pour y être réchauffé et sortant par le tube intérieur ;
- les tubes ont une section circulaire, dont le diamètre croît légèrement de l'intérieur vers l'extérieur, la section du premier tube ayant un diamètre plus petit que celui de la section du second tube, ce diamètre étant lui-même plus petit que celui de la section du troisième tube, le cas échéant ;
- le premier tube a une section circulaire, tandis que le second tube et, le cas échéant, le troisième tube, ont des sections légèrement ovalisées, sensiblement elliptiques, obtenue par formage à partir d'un tube de section circulaire de même diamètre que le premier tube, et dont le grand axe est parallèle à l'axe des enroulements, l'ovalisation du troisième tube, s'il y en a un, étant plus prononcée que celle du second tube.

D'autres caractéristiques et avantages de l'invention apparaîtrons à la lecture de la description suivante d'un mode de réalisation préféré de l'invention. Cette description est faite en référence aux dessins annexés dans lesquels :
- la figure 1 est une vue schématique, en coupe axiale, d'un échangeur de chaleur conforme à l'invention, à deux enroulements de tubes ;
- la figure 2 est une demi-vue similaire à la figure 1, le plan de coupe passant par la manchette d'évacuation des gaz ;
- la figure 3 est une vue de dessus du double enroulement tubulaire ;
- la figure 4 est une vue (partielle) en perspective de ce double enroulement ;
- la figure 5 est une vue de détail, en coupe et à grande échelle, de deux tubes voisins ;
- la figure 6 est similaire à la figure 5 ;
- la figure 7, également similaire aux figures 5 et 6, est destinée à montrer les bossages servant à calibrer les écartements entre spires et tubes ;
- la figure 8 est une demi-vue schématique, en coupe axiale, d'un échangeur de chaleur conforme à l'invention, à trois enroulements de tubes ;
- la figure 9 est une vue de détail, en coupe et à grande échelle, analogue à la figure 5, de trois tubes voisins ;
- la figure 10 est une vue (partielle) en perspective de ce triple enroulement de tubes ;
- les figures 11 et 12 sont des vues de détail analogues aux figures 6 et 9, montrant trois tubes voisins selon deux variantes possibles de l'invention, l'une (Figure 11) à tubes de section strictement circulaire, mais de diamètres différents, l'autre (Figure 12) à tubes initialement de même diamètre, mais dont deux ont une section ovalisée.

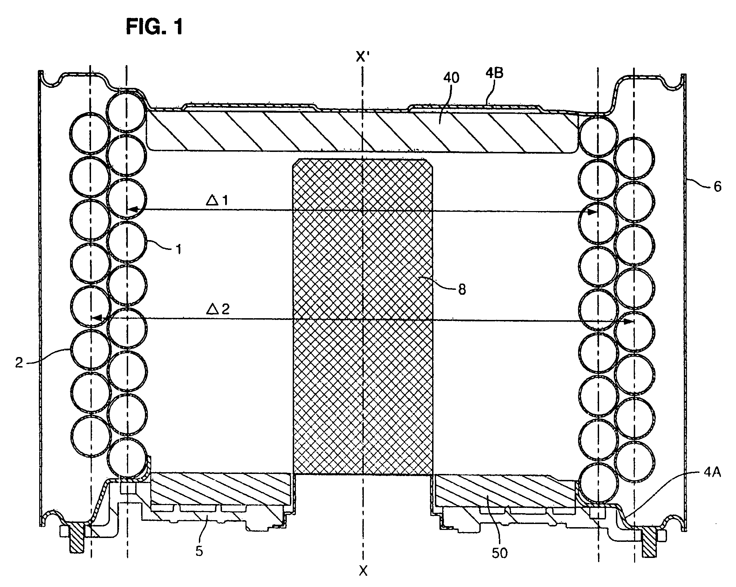

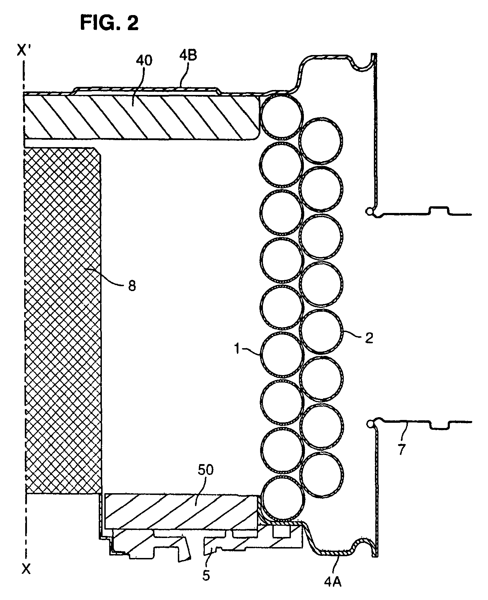

Sur les figures 1 à 11, on a affaire à des tubes « ronds », c'est-à-dire de section circulaire.

L'échangeur de chaleur représenté sur les figures 1 à 7 comprend une paire d'enroulements tubulaires conformés en hélice, coaxiaux d'axe **X-X',** l'un intérieur 1, l'autre extérieur 2.

Ils sont montés et maintenus centrés et immobilisés à l'intérieur d'une enveloppe 6 étanche aux gaz, de forme cylindrique (virole), fermée à ses extrémités par une façade 4A et un fond 4B ; ces éléments sont par exemple en tôle d'acier inoxydable.

La façade 4A a la forme d'un cadre présentant une ouverture centrale obturée par un couvercle amovible 5, de forme sensiblement discoïde, qui y est fixé à l'aide de vis par exemple.

Ce couvercle est par exemple en matière composite, résistant à la chaleur.

Le fond 4B est garni intérieurement d'une plaque discoïde en matériau thermiquement isolant et réfractaire, apte à résister à des températures élevées.

Il en est de même pour le couvercle 5 qui est garni intérieurement d'une plaque annulaire 50 ayant des caractéristiques similaires, et est pourvu en son centre d'un brûleur 8 à gaz ou à fuel.

Sur le mode de réalisation illustré, il s'agit d'un brûleur de forme cylindrique, d'axe **X-X' ;** cependant le brûleur pourrait avoir une autre forme, pourvu que les gaz qu'il génère occupent l'espace intérieur à l'enroulement de tube 1.

Ce brûleur est alimenté en carburant et comburant par des moyens appropriés non représentés, bien connus de l'homme du métier.

Il génère des gaz chauds qui viennent occuper l'espace central de l'échangeur de chaleur, délimité par le tube intérieur 1 et les plaques 50 et 40.

Après avoir traversé les interstices inter-spires de chaque enroulement tubulaire 1 et 2, radialement vers l'extérieur, ces gaz se retrouvent à l'intérieur de l'enveloppe, à l'extérieur de l'enroulement 2, et sont ensuite évacués par une manchette 7 ; cette évacuation, le cas échéant, peut être favorisée par mise en oeuvre d'un dispositif d'aspiration des fumées.

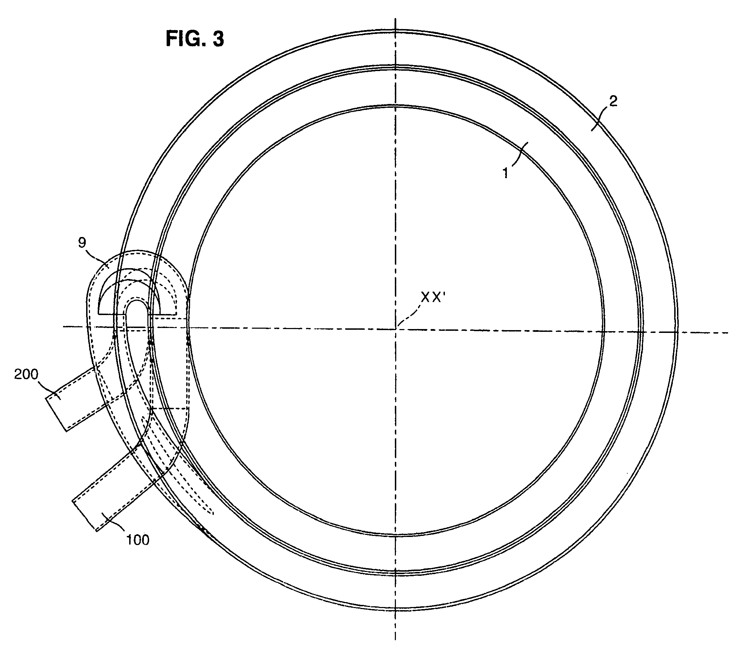

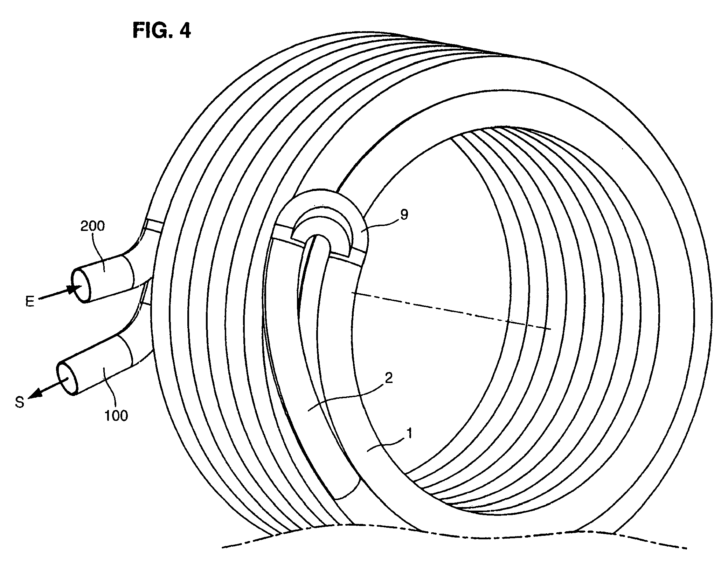

Les tubes 1 et 2 sont branchés en série, au moyen d'une tubulure coudée, en forme de « U », désignée 9 sur les figures 3 et 4.

Le tube 2 présente une embouchure 200 destinée à être raccordée à un conduit d'amenée du fluide à réchauffer (flèche **E,** figure 4) tandis que, de manière similaire, le tube 1 présente une embouchure 100 destinée à être raccordée à un conduit de sortie du fluide réchauffé (flèche S, figure 4).

Ce fluide est par exemple de l'eau utilisée à des fins domestiques, pour alimenter les radiateurs d'un système de chauffage central ou pour produire de l'eau chaude sanitaire.

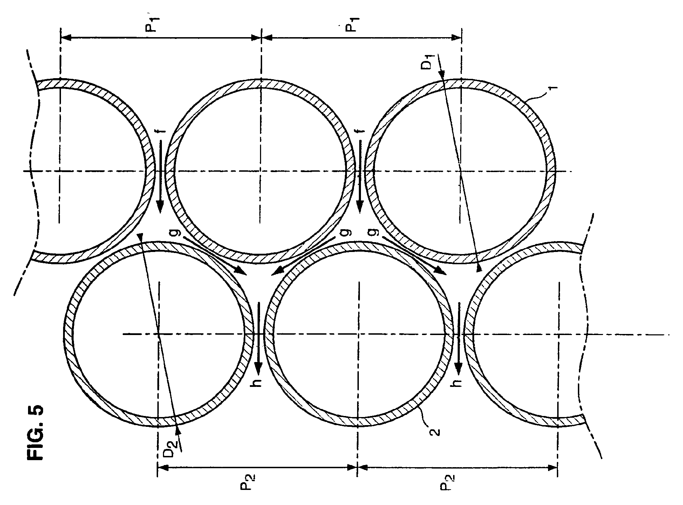

Les figures 5 à 7 montrent les positions relatives des deux tubes hélicoïdaux 1 et 2, le brûleur 8 (non représenté) étant situé sur la droite de ces figures.

En référence à la figure 5, **P1** et **P2** désignent respectivement les pas d'enroulement en hélice des deux tubes 1 et 2. Selon une caractéristique de l'invention, ces deux pas sont égaux : **P1** = **P2.**

Cependant, les deux enroulements sont décalés longitudinalement (suivant **X-X'**) d'une valeur d'un demi pas **P1**/2 (ou **P2**/2).

Ainsi, l'interstice inter-spires de l'enroulement intérieur 1 débouche radialement en regard de la face interne de la section du tube extérieur 2.

Les deux enroulements sont ainsi imbriqués (par vissage) l'un dans l'autre, leur

**D1** et **D2** désignent respectivement les diamètres extérieurs des deux sections de tube 1 et 2. Selon une caractéristique de l'invention, **D1** est légèrement inférieur à **D2**.

Sur cette figure 5, les flèches **f**, **g** et **h** symbolisent le cheminement des gaz de combustion chauds générés par le brûleur.

Les tubes 2 et 1 sont parcourus (dans cet ordre) par l'eau à réchauffer.

En passant à travers les interstices inter-spires de l'enroulement constitué par le tube intérieur 1 (flèches **f**), ces gaz libèrent une partie de leur chaleur qui est transmise à l'eau circulant dans ce tube.

Cet échange thermique résulte de plusieurs phénomènes concomitants. En effet, le tube intérieur est exposé à un rayonnement issu du brûleur et est soumis à un transfert de calories par convection puis conduction à travers la paroi du tube ; on observe également un phénomène de condensation d'une partie de la phase vapeur contenue dans les gaz qui, passant en phase liquide, provoque une réaction exothermique.

Le flux de gaz partiellement refroidi **f** rencontre alors la zone interne du tube 2 et se trouve scindé en deux flux secondaires symbolisés par les flèches **g.**

Leur direction forme un angle sensiblement égal à 60° par rapport à l'axe longitudinal **X-X'.**

Ces flux lèchent la zone interne (ou amont) du tube 1 en contournant la zone externe (ou aval) du tube 2, contribuant au réchauffage de l'eau qui se trouve dans ce dernier.

Les deux flux obliques **g** se combinent ensuite pour former un courant **h** qui passe dans l'interstice inter-spires du tube extérieur 2, réchauffant de la même manière le liquide qui y circule.

Pour assurer un enveloppement plus complet du tube 2, des organes déflecteurs additionnels, tels que décrits par exemple dans le document US 5 687 678 précité, peuvent être avantageusement prévus.

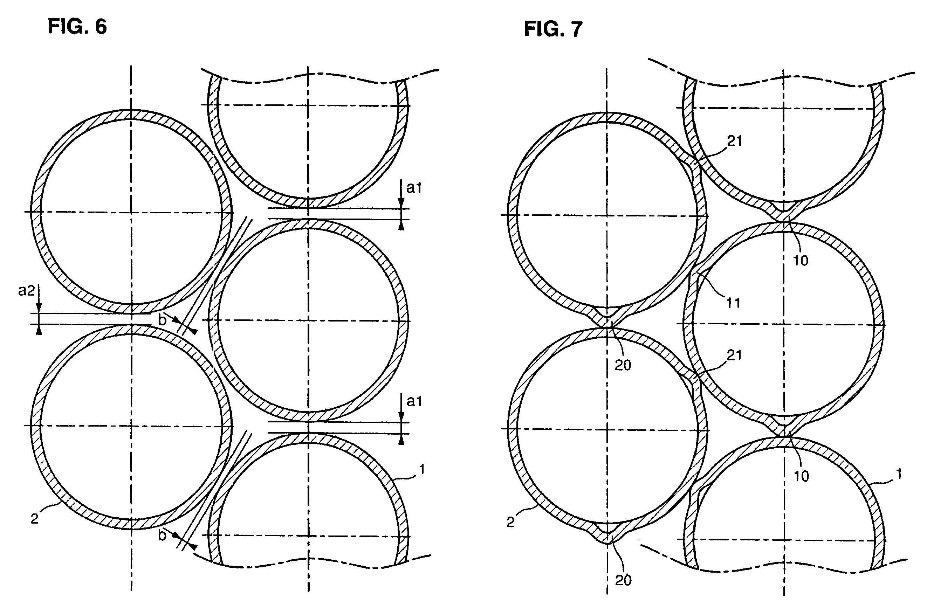

Sur la figure 6, on a désigné par les références **a1** et **a2** les valeurs des espaces -ou interstices- séparant deux spires des tubes 1, respectivement 2.

On y a désigné par la référence **b** la valeur de l'espace minimal séparant les deux tubes 1 et 2.

Ces valeurs sont très faibles par rapport aux diamètres **D1** et **D2,** afin d'obliger les courants de gaz chauds à passer au plus près des tubes, et d'assurer une bonne transmission de la chaleur, par conduction, ainsi qu'une bonne condensation.

Dans l'hypothèse ou ces courants ne subiraient pas de modification de leur température au cours de leur parcours, il serait souhaitable que les interstices inter-spires des deux tubes aient la même valeur (**a1** = **a2**) et que l'intervalle de valeur **b,** dans lequel ne passe que la moitié du débit soit égale à la moitié de cette valeur (1/2 **a1**).

En effet, ceci permettrait un écoulement régulier, à vitesse quasi constante des courants de gaz, sans perte de charge notable, du fait que les sections de passage minimales qu'ils doivent traverser sont identiques.

Cependant, ce n'est pas vrai si la température des gaz varie, ce qui est naturellement le cas pour un échangeur de chaleur.

C'est pourquoi, conformément à l'invention, ces valeurs sont choisies de manière à tenir compte de l'abaissement de température progressif de ce courant gazeux, et de la réduction de volume qui en résulte par application des lois de la thermodynamique, afin que la vitesse de passage des gaz demeure quasiment constante, ou, en tout cas, varie peu, de l'intérieur vers l'extérieur des enroulements.

A cet effet, selon une caractéristique de l'invention, **b** a une valeur légèrement inférieure à la moitié de **a1,** tandis que **a2** a une valeur voisine de 2**b** ou légèrement inférieure à cette valeur (et par conséquent aussi inférieure à **a1**).

A titre indicatif, **b** = 0,4 **a1** par exemple.

L'inégalité **a2** < **a1** résulte de la différence des diamètres **D1** et **D2** (vu que **P1=P2**).

Quant à la valeur de **b,** elle est liée à la différence de diamètre des deux enroulements, lesquels sont référencés **Δ1** et **Δ2** sur la figure 1.

Il est important par ailleurs que ces valeurs prédéterminées soient constantes sur toute la longueur du double faisceau de tubes 1 et 2.

Pour cela il est pourvu de moyens jouant le rôle d'entretoises, aptes à calibrer de manière précise l'espacement inter-spires de chacun des tubes et l'espacement mutuel des deux tubes, sur toute leur longueur.

Ces moyens sont avantageusement des bossages tels que ceux représentés sur la figure 7.

Chaque tube 1 et 2 comporte deux séries de bossages 10-11 et 20-21 régulièrement répartis sur toute la longueur du tube ; à titre indicatif on peut prévoir entre 4 et 10 bossages par spire, pour chaque série.

Les bossages 10, 20 de la première série sont tournés vers le haut ou vers le bas si on considère que l'axe **X**-**X**' est vertical.

Ils sont destinés à venir en contact avec la partie opposée (basse ou haute) lisse de la spire adjacente du même tube.

Les bossages 11, 21 de la seconde série forment un angle sensiblement égal à 120° par rapport à ceux de la première série, si on se réfère au centre de la section circulaire du tube.

Ils sont destinés à venir en contact avec l'autre tube, comme on le comprend aisément à la simple observation de la figure 7.

Ces bossages sont de petites cuvettes bombées, embouties dans la paroi depuis l'intérieur du tube, et dont la hauteur, qui fait saillie vers l'extérieur, est déterminée pour correspondre :
- à la valeur **a1**, en ce qui concerne les bossages 10 ;
- à la valeur **b,** en ce qui concerne les bossages 11 et 21 ;
- à la valeur **a2,** en ce qui concerne les bossages 20.

L'emboutissage des petites cuvettes dans le tube peut se faire au moyen d'un outil approprié de type connu introduit à l'intérieur du tube, soit dans le tube rectiligne, avant cintrage, soit durant ce cintrage.

Un dispositif d'emboutissage susceptible de convenir est décrit par exemple dans le document EP 1 138 404.

Le contact d'un bossage avec la partie lisse de la spire voisine ou du tube voisin est de préférence quasi ponctuel, afin de ne pas faire obstacle au libre passage des gaz.

L'imbrication l'un dans l'autre des deux enroulements, qui s'opère par vissage, se fait avantageusement avec un certain serrage (sans jeu) de manière à assurer un contact certain de l'ensemble des bossages 11 et 21 contre le tube voisin.

De même, après montage, les deux enroulements sont soumis à une légère compression axiale, qui peut être dû simplement au dimensionnement axial relatif de l'enveloppe dans laquelle ils sont logés, de manière à assurer un contact certain de l'ensemble des bossages 10 et 20 contre les spires adjacentes.

Cette légère compression axiale pourrait également être obtenue à l'aide de moyens spécifiques, tels que des tirants de contention par exemple.

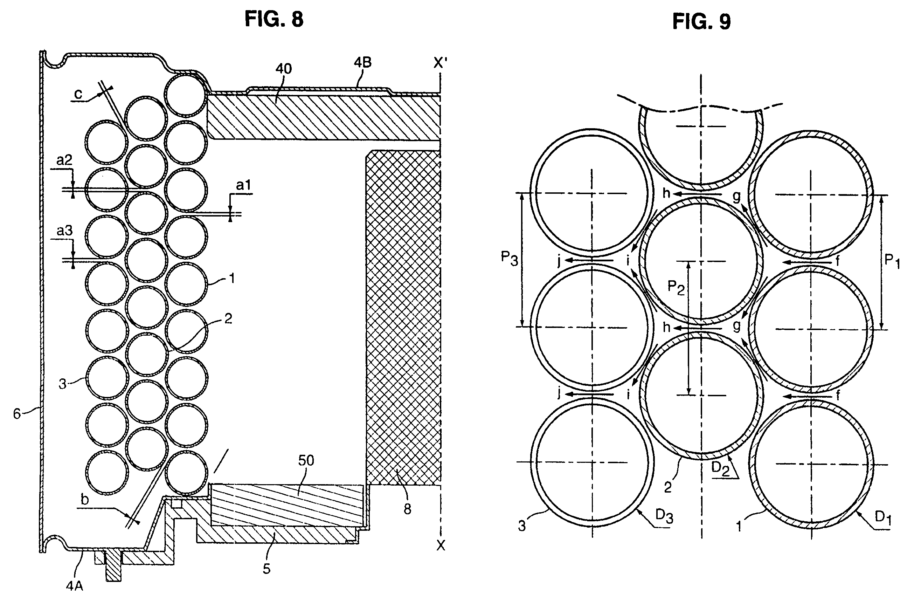

La variante d'échangeur de chaleur illustrée sur les figures 8 à 11 étant similaire au mode de réalisation qui vient d'être décrit, hormis le nombre différent de ses enroulements tubulaires, les éléments constitutifs analogues ont été affectés des mêmes chiffres de référence.

Cet échangeur de chaleur comporte trois enroulements de tubes hélicoïdaux 1, 2 et 3 imbriqués l'un dans l'autre.

La relation entre les tubes intermédiaire 2 et extérieur 3 est analogue à celle qui existe entre les tubes intérieur 1 et intermédiaire 2, et similaires à celle entre les deux tubes 1 et 2 du mode de réalisation précédent.

On retrouve simplement un étage d'échange calorifique supplémentaire, les gaz quittant les interstices de l'enroulement 2 venant lécher le troisième tube 3 au lieu de se retrouver directement dans l'espace périphérique de l'enveloppe 6.

Le pas **P3** du tube 3 est égal aux pas **P1** et **P2** des tubes 1 et 2.

Il a une section de diamètre **D3** légèrement supérieur à **D2** (et donc à **D1**).

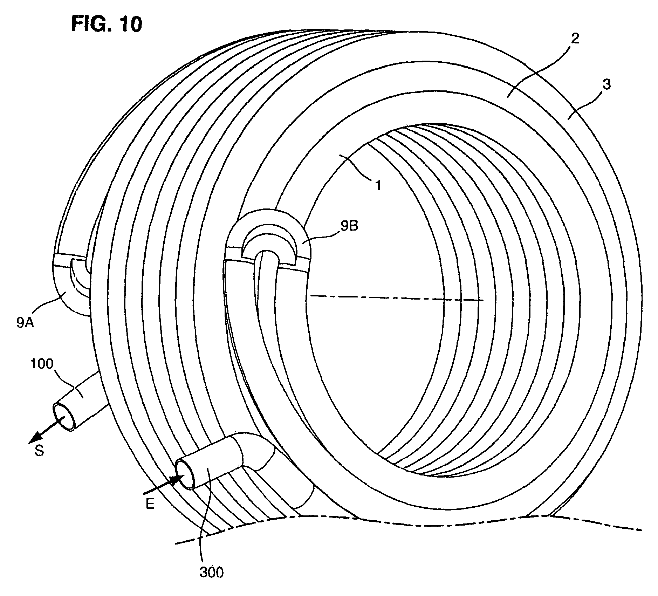

En référence à la figure 10, on notera que les trois tubes sont connectés en série via des tubulures de raccordement coudées 9A (reliant les tubes 3 et 2) et 9B (reliant les tubes 2 et 1).

Le tube extérieur 3 présente une embouchure 300 destinée à être raccordée à un conduit d'amenée du fluide à réchauffer (flèche **E,** figure 10) tandis que, de manière similaire, le tube 1 présente une embouchure 100 destinée à être raccordée à un conduit de sortie du fluide réchauffé (flèche **S**).

Les flux de cheminement des gaz chauds entre les tubes 1 et 2, symbolisé par les flèches **f, g** et **h** sur la figure 9 sont similaires à celui du premier mode de réalisation.

En sortie des interstices inter-spires du tube intermédiaire 2, ce flux est subdivisé en deux flux obliques **i,** et ceux-ci se rejoignent en un flux radial **j** qui traverse à son tour les interstices inter-spires du tube extérieur 3.

Selon une caractéristique de l'invention, l'écartement minimal **c** entre les tubes 2 et 3 a une valeur égale à la moitié de la valeur **a2,** ou est légèrement plus faible que cette valeur, et la largeur **a3** de l'interstice des spires du tube 3 est voisine de 2**c** ou un peu plus petite que cette valeur.

Le calibrage de ces différents espaces est avantageusement assuré au moyen de bossages emboutis dans chacun des trois tubes (et non représentés), par un agencement similaire au précédent.

La maîtrise des vitesses du flux gazeux permet de maintenir des écoulements favorisant les échanges thermiques avec la paroi des tubes, ce qui permet de réduire les surfaces d'échange thermique et, corrélativement, d'abaisser le prix de revient.

Les dimensions des tubes sont naturellement adaptées à la puissance de l'échangeur, qui est généralement comprise entre 10 et 50 kW pour des applications domestiques et entre 50 et 1000 kW, voire plus, pour des applications industrielles.

A titre purement indicatif, sont données ci-après quelques valeurs dimensionnelles possibles pour un échangeur de chaleur à trois enroulements pourvu d'un brûleur à gaz, ayant une puissance de l'ordre de 25 kW, et destinée à faire passer de l'eau d'une température de 30°C à 80°C.

Les enroulements intérieur (tube 1) et extérieur (tube 3) sont à six spires, et l'enroulement intermédiaire (tube 2) est à cinq spires.

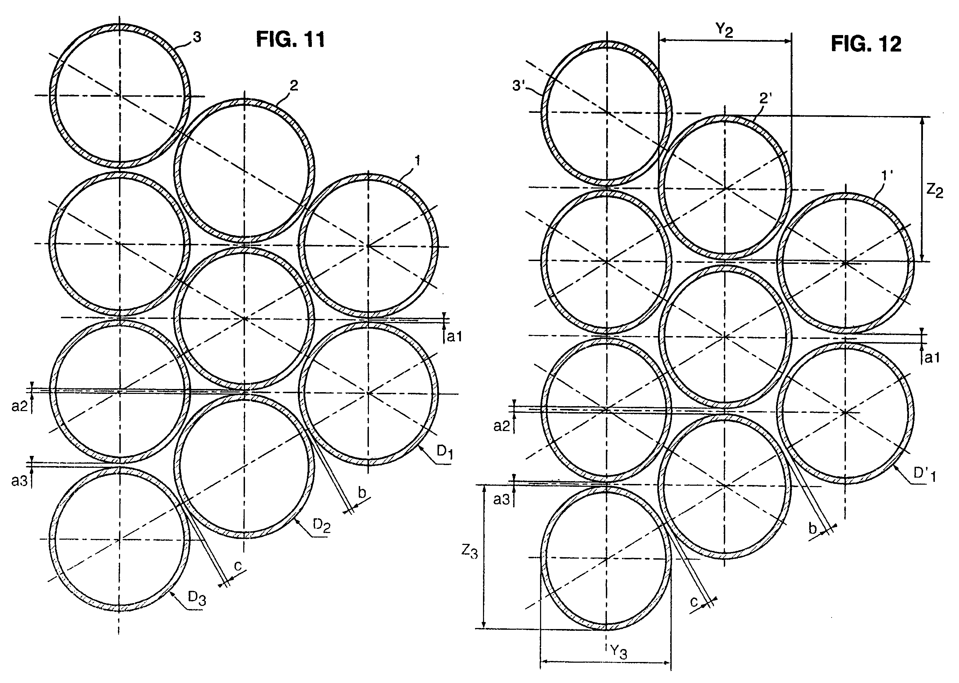

S'agissant du mode de réalisation à trois tubes « ronds », illustré notamment sur la figure 11, on indique ci-après les dimensions ci-après, à titre d'exemples :
Pas d'enroulement de chaque tube : 19 mm.

Diamètres **Δ** des enroulements:
- pour le tube 1, de 210 mm ;
- pour le tube 2, de 241,84 mm ;
- pour le tube 3, de 274,17 mm.

Diamètre extérieur de la section circulaire :
- pour le tube intérieur 1, **D1** = 18 mm ;
- pour le tube médian 2, **D2** = 18,3 mm ;
- pour le tube extérieur 3, **D3** = 18,6 mm.

Les différentes dimensions de passage des gaz ont les valeurs ci-après :
**a1=1** 1 mm
**b** = 0,4 mm
**a2** = 0,7mm
**c** = 0,3 mm
**a3** = 0,4 mm

S'agissant de la variante de la figure 12. le pas d'enroulement de chaque tube est également de 19 mm, et le tube intérieur l' a aussi une section de diamètre **D'1** égal à 18 mm.

Diamètres des enroulements:
- pour le tube l' : 210 mm ;
- pour le tube 2' : 241,34 mm;
- pour le tube 3' : 272,10 mm.

Les deux autres tubes 2' et 3' sont légèrement ovalisés, par formage à partir d'un tube rond de diamètre **D'1,** de manière à présenter une section elliptique, dont le grand axe est parallèle à l'axe des enroulements, le petit axe étant par conséquent orienté radialement.

Le tube médian 2' est ovalisé de telle manière que sa section présente une petite dimension **Y2** = 17,7 mm et une grande dimension **Z2** = 18,3 mm.

Le tube extérieur 3' est un peu plus ovalisé (plus « aplati »), de telle manière que sa section présente une petite dimension **Y3** = 17,4 mm et une grande dimension **Z2** = 18,6 mm.

Les différents « étranglements » de passage des gaz ont les mêmes valeurs qu'avec les tubes ronds de la figure 11, à savoir :
**a1** = 1 mm
**b** = 0,4 mm
**a2** = 0,7mm
**c** = 0,3 mm
**a3** = 0,4 mm

Les gaz brûlés émis par le brûleur ont une température de l'ordre de 950°C.

Au fur et à mesure de leur transfert cette température s'abaisse approximativement comme suit, que ce soit avec des tubes ronds (figure 11) ou ovalisés (figure 12) :
Au niveau de l'intervalle **a1** (flux **f**), elle est de 420°C environ;
Au niveau de l'intervalle **b** (flux **g**), elle est de 200°C environ;
Au niveau de l'intervalle **a2** (flux **b**), elle est de 110°C environ;
Au niveau de l'intervalle **c** (flux **i**), elle est de 70°C environ;
Au niveau de l'intervalle **a3** (flux **j),** elle est de 60°C environ.

Leur vitesse décroît progressivement et faiblement, d'une valeur de 8 m/s environ au niveau de l'intervalle d'entrée **a1** à une valeur de 7 m/s environ au niveau de l'intervalle de sortie **a3.**

Le nombre d'enroulement mis en oeuvre n'est pas forcément limité à trois.

Les différents tubes, ou certains deux, pourraient être montés en parallèle et non en série, et ils ne véhiculent pas forcément le même fluide.

Ainsi par exemple, l'un des tubes pourrait être monté en parallèle avec les deux autres connectés en série, le premier étant parcouru par un premier fluide et les deux autres par un second fluide, distinct du premier, voire de nature différente du premier.

Différents moyens -autres que des bossages- peuvent naturellement être mis en oeuvre pour servir d'entretoises afin de calibrer les espaces inter-spires et inter-tubes.

S'agissant de l'espacement inter-spires, il peut s'agir par exemple d'organes écarteurs en forme de peigne du genre décrit dans les documents WO 2005/028966 et EP 1 279 903 déjà cités.

## Revendications

1. Echangeur de chaleur à condensation, qui comporte un premier tube (1) de section circulaire, ou légèrement ovalisée, enroulé en hélice disposé à l'intérieur d'une enveloppe (6) étanche aux gaz, et dont les spires sont légèrement écartées l'une de l'autre d'un interstice de faible largeur **a1**, ce tube étant parcouru par un fluide à réchauffer, tel que de l'eau notamment, un brûleur(8) étant adapté pour générer à l'intérieur de ce tube hélicoïdal (1) des gaz chauds de telle sorte qu'ils traversent ces interstices de l'intérieur vers l'extérieur, de manière à réchauffer le fluide circulant dans le tube, cet échangeur comprenant en outre au moins un deuxième tube (2) de section circulaire, ou légèrement ovalisée, enroulé en hélice, et également parcouru par un fluide à réchauffer, dont le pas **(P2)** est égal à celui **(P1)** du premier tube, mais dont le diamètre d'enroulement est supérieur à celui (**Δ1**) du premier tube, l'enroulement hélicoïdal que constitue ce deuxième tube (2) étant disposé concentriquement autour de l'enroulement hélicoïdal que constitue le premier tube (1), mais avec un décalage d'un demi pas en direction axiale **(X-X')**, ces tubes (1,2) étant réalisés dans un métal thermiquement bon conducteur, ladite enveloppe (6) étant munie d'une manchette (7) d'évacuation des gaz refroidis qui ont traversé les spires de chaque enroulement, **caractérisé par le fait que** lesdits tubes ont une configuration telle que :
- l'écartement minimal **b** entre les deux tubes (1,2) est constant, de valeur inférieure ou égale à la moitié de **a1** ;
- la largeur **a2** de l'interstice séparant les spires du deuxième tube (2) est égale à **2b**, ou inférieure à cette valeur.

2. Echangeur de chaleur à condensation selon la revendication 1, **caractérisé par le fait que** les valeurs des interstices **a1** et **a2** et de l'écartement **b** sont déterminées de telle façon que la vitesse de passage des gaz soit sensiblement constante dans les zones de passage de section réduite, entre les spires du premier tube (1), dans l'intervalle séparant les deux tubes, puis entre les spires du deuxième tube (2), malgré l'abaissement de température qu'ils subissent en traversant le double enroulement de tubes, de l'intérieur vers l'extérieur.

3. Echangeur de chaleur à condensation selon la revendication 1 ou 2, **caractérisé par le fait qu'**il comporte au moins un troisième tube (3) de section circulaire, ou légèrement ovalisée, enroulé en hélice et également parcouru par un fluide à réchauffer, dont le pas **(P3)** est égal à celui des premiers et second tubes, mais dont le diamètre d'enroulement est légèrement supérieur à celui **(Δ2)** du second tube, l'enroulement hélicoïdal que constitue ce troisième tube (3) étant disposé concentriquement autour de l'enroulement hélicoïdal que constitue le deuxième tube (2), mais avec un décalage d'un demi pas en direction axiale **(X-X')** par rapport à celui-ci, et que l'écartement minimal c entre les deuxième et troisième tubes (2, 3) est constant, de valeur égale ou inférieure à la moitié de **a2**, tandis que la largeur **a3** de l'interstice séparant les spires du troisième tube (3) est égale à **2c,** ou inférieure à cette valeur.

4. Echangeur de chaleur à condensation selon la revendication 3, **caractérisé par le fait que** les valeurs des interstices **a2** et **a3 et** de l'écartement **c** sont déterminées de telle façon que la vitesse de passage des gaz soit sensiblement constante dans les zones de passage de section réduite, entre les spires du deuxième tube (2), dans l'intervalle séparant les deuxième et troisième tubes (2, 3), puis entre les spires du troisième tube (3), malgré l'abaissement de température qu'ils subissent en traversant les enroulements de tubes, de l'intérieur vers l'extérieur.

5. Echangeur de chaleur à condensation selon l'une des revendications précédentes, **caractérisé par le fait qu'**il comporte des moyens de calibrage aptes à maintenir constants et à des valeurs prédéfinies les interstices entre les spires d'un même tube et les espaces minimaux entre deux tubes voisins.

6. Echangeur de chaleur à condensation selon la revendication 5, **caractérisé par le fait que** lesdits moyens de calibrage sont des bossages (10, 20 ; 11, 21) emboutis dans la paroi des tubes (1, 2) et faisant saillie vers l'extérieur.

7. Echangeur de chaleur à condensation selon la revendication 6, **caractérisé par le fait que** chaque tube (1, 2) est pourvu d'au moins deux séries de bossages (10, 20 ; 11, 21) régulièrement répartis sur toute leur longueur, l'une des séries de bossages (10, 20) étant adaptée pour calibrer l'écartement entre ses spires, et l'autre (11, 21) pour calibrer son espacement par rapport à un tube voisin.

8. Echangeur de chaleur à condensation selon la revendication 6 ou 7, **caractérisé par le fait que** lesdits bossages ont la forme d'une calotte sphérique apte à venir en contact quasi ponctuel contre la paroi externe d'une spire adjacente ou d'un tube voisin.

9. Echangeur de chaleur à condensation selon l'une des revendications précédentes, **caractérisé par le fait que** les tubes constitutifs des différents enroulements sont raccordés les uns aux autres via des tubulures coudées (9 ; 9A, 9B), et sont branchées en série, le fluide à réchauffer entrant dans le tube extérieur (2 ; 3) pour y être préchauffé, et sortant par le tube intérieur (1).

10. Eçhangeur de chaleur à condensation selon l'une des revendications précédentes, **caractérisé par le fait que** lesdits tubes ont une section circulaire, dont le diamètre croît légèrement de l'intérieur vers l'extérieur, la section du premier tube (1) ayant un diamètre **(D1)** plus petit que celui **(D2)** de la section du second tube (2), ce diamètre **(D2)** étant lui-même plus petit que celui **(D3)** de la section du troisième tube (3), le cas échéant.

11. Echangeur de chaleur à condensation selon l'une des revendications 1 à 9, **caractérisé par le fait que** le premier tube (1') a une section circulaire, tandis que le second tube (2') et, le cas échéant, le troisième tube (3') ont des sections légèrement ovalisées, sensiblement elliptiques, obtenue par formage à partir d'un tube de section circulaire de même diamètre que le premier tube (3'), et dont le grand axe est parallèle à l'axe **(X-X'**) des enroulements, l'ovalisation du troisième tube (3'), s'il y en a un, étant plus prononcée que celle du second tube (2').

## Patentansprüche

1. Kondensationswärmetauscher, der ein erstes Rohr (1) mit kreisförmigem oder leicht unrundem Querschnitt umfasst, das schraubenförmig gewunden ist und im Inneren einer gasdichten Hülle (6) angeordnet ist und dessen Windungen leicht um einen Zwischenraum mit geringer Breite a1 voneinander beabstandet sind, wobei dieses Rohr durch ein zu erwärmendes Fluid, wie beispielsweise insbesondere Wasser, durchquert wird, wobei ein Brenner (8) angepasst ist, um im Inneren dieses schraubenförmigen Rohres (1) heiße Gase zu erzeugen, derart, dass sie diese Zwischenräume von innen nach außen durchqueren, derart, dass das Fluid, das in dem Rohr umläuft, erwärmt wird, wobei dieser Tauscher ferner mindestens ein zweites Rohr (2) mit kreisförmigem oder leicht unrundem Querschnitt umfasst, das schraubenförmig gewunden ist und ebenfalls durch ein zu erwärmendes Fluid durchquert wird, dessen Steigung (P2) gleich ist wie diejenige (P1) des ersten Rohres, aber dessen Windungsdurchmesser größer ist als derjenige (Δ1) des ersten Rohres, wobei die schraubenförmige Windung, die dieses zweite Rohr (2) bildet, konzentrisch um die schraubenförmige Windung, die das erste Rohr (1) bildet, aber mit einem Versatz von einer halben Steigung in der axialen Richtung (X-X') angeordnet ist, wobei diese Rohre (1, 2) aus einem Metall mit guter Wärmeleitfähigkeit ausgeführt sind, wobei die Hülle (6) mit einer Manschette (7) für den Ablass der abgekühlten Gase, die die Windungen von jeder Wicklung durchquert haben, versehen ist, **dadurch gekennzeichnet, dass** die Rohre eine Ausgestaltung aufweisen, die derart ist, dass:
- der Mindestabstand b zwischen den zwei Rohren (1, 2) konstant ist und einen Wert aufweist, der kleiner oder gleich die Hälfte von a1 ist;
- die Breite a2 des Zwischenraums, der die Windungen des zweiten Rohres (2) trennt, gleich 2b oder kleiner als dieser Wert ist.

2. Kondensationswärmetauscher nach Anspruch 1, **dadurch gekennzeichnet, dass** die Werte der Zwischenräume a1 und a2 des Abstands b derart bestimmt werden, dass die Geschwindigkeit des Durchgangs der Gase im Wesentlichen in den Durchgangsbereichen mit verringertem Querschnitt zwischen den Windungen des ersten Rohres (1) in dem Intervall, das die zwei Rohre trennt, und dann zwischen den Windungen des zweiten Rohres (2) trotz der Senkung der Temperatur, die sie beim Durchqueren der Doppelwicklung der Rohre von innen nach außen erfahren, im Wesentlichen konstant ist.

3. Kondensationswärmetauscher nach Anspruch 1 oder 2, **dadurch gekennzeichnet, dass** er mindestens ein drittes Rohr (3) mit kreisförmigem oder leicht unrundem Querschnitt umfasst, das schraubenförmig gewunden ist und ebenfalls durch ein zu erwärmendes Fluid durchquert wird, dessen Steigung (P3) gleich derjenigen des ersten und des zweiten Rohres ist aber dessen Wicklungsdurchmesser leicht größer ist als derjenige (Δ2) des zweiten Rohres, wobei die schraubenförmige Wicklung, die dieses dritte Rohr (3) bildet, konzentrisch um die schraubenförmige Wicklung, die das zweite Rohr (2) bildet, aber mit einem Versatz von einer halben Steigung in der axialen Richtung (X-X') in Bezug dazu angeordnet ist, und dass der Mindestabstand c zwischen dem zweiten und dem dritten Rohr (2, 3) konstant ist und einen Wert aufweist, der gleich oder kleiner als die Hälfte von a2 ist, während die Breite a3 des Zwischenraums, der die Windungen des dritten Rohres (3) trennt, gleich 2c oder kleiner als dieser Wert ist.

4. Kondensationswärmetauscher nach Anspruch 3, **dadurch gekennzeichnet, dass** die Werte der Zwischenräume a2 und a3 und des Abstands c derart bestimmt sind, dass die Geschwindigkeit des Durchgangs der Gase in den Durchgangsbereichen mit verringertem Querschnitt zwischen den Windungen des zweiten Rohres (2) in dem Intervall, das das zweite und das dritte Rohr (2, 3) trennt, und dann zwischen den Windungen des dritten Rohres (3) trotz der Senkung der Temperatur, die sie beim Durchqueren der Wicklungen der Rohre von innen nach außen erfahren, im Wesentlichen konstant ist.

5. Kondensationswärmetauscher nach einem der vorhergehenden Ansprüche, **dadurch gekennzeichnet, dass** er Kalibrierungsmittel umfasst, die geeignet sind, die Zwischenräume zwischen den Windungen eines selben Rohres und die Mindesträume zwischen zwei benachbarten Rohren konstant und auf vordefinierten Werten zu halten.

6. Kondensationswärmetauscher nach Anspruch 5, **dadurch gekennzeichnet, dass** die Kalibrierungsmittel Erhöhungen (10, 20; 11, 21) sind, die in der Wand der Rohre (1, 2) ausgebaucht sind und nach außen hervorstehen.

7. Kondensationswärmetauscher nach Anspruch 6, **dadurch gekennzeichnet, dass** jedes Rohr (1, 2) mit mindestens zwei Reihen von Erhöhungen (10, 20; 11, 21) versehen ist, die regelmäßig über ihre gesamte Länge verteilt sind, wobei eine von den Reihen von Erhöhungen (10, 20) zum Kalibrieren des Abstands zwischen seinen Windungen und die andere (11, 21) zum Kalibrieren seines Zwischenraums in Bezug zu einem benachbarten Rohr angepasst ist.

8. Kondensationswärmetauscher nach Anspruch 6 oder 7, **dadurch gekennzeichnet, dass** die Erhöhungen die Form einer Kugelkappe aufweisen, die geeignet ist, gegen die Außenwand einer benachbarten Windung oder eines benachbarten Rohres in eine nahezu punktuelle Berührung zu gelangen.

9. Kondensationswärmetauscher nach einem der vorhergehenden Ansprüche, **dadurch gekennzeichnet, dass** die Rohre, die die verschiedenen Wicklungen bilden, über gebogene Stutzen (9; 9A, 9B) miteinander verbunden sind und in Reihe angeschlossen sind, wobei das zu erwärmende Fluid in das äußere Rohr (2; 3) eindringt, um darin vorgewärmt zu werden, und durch das innere Rohr (1) austritt.

10. Kondensationswärmetauscher nach einem der vorhergehenden Ansprüche, **dadurch gekennzeichnet, dass** die Rohre einen kreisförmigen Querschnitt aufweisen, dessen Durchmesser von innen nach außen leicht zunimmt, wobei der Querschnitt des ersten Rohres (1) einen Durchmesser (D1) aufweist, der kleiner ist als derjenige (D2) des Querschnitts des zweiten Rohres (2), wobei dieser Durchmesser (D2) gegebenenfalls selbst kleiner ist als derjenige (D3) des Querschnitts des dritten Rohres (3).

11. Kondensationswärmetauscher nach einem der Ansprüche 1 bis 9, **dadurch gekennzeichnet, dass** das erste Rohr (1') einen kreisförmigen Querschnitt aufweist, während das zweite Rohr (2') und gegebenenfalls das dritte Rohr (3') Querschnitte aufweisen, die leicht unrund, im Wesentlichen elliptisch, sind, die durch Formen ausgehend von einem Rohr mit kreisförmigem Querschnitt mit dem gleichen Durchmesser wie das erste Rohr (3') gebildet werden und dessen Hauptachse parallel zur Achse (X-X') der Wicklungen ist, wobei die Unrundheit des dritten Rohrs (3'), falls eines vorhanden ist, ausgeprägter ist als diejenige des zweiten Rohres (2').

## Claims

1. A condensing heat exchanger, which includes a first tube (1) with a circular or slightly ovalized section, helically wound, positioned inside a casing (6) impervious to gases, and for which the turns are slightly moved away from each other by an interstice of a small width a1, this tube being covered by a fluid to be heated up, such as notably water, a burner (8) being adapted for generating inside this helical tube (1) hot gases and so that they cross these interstices from the inside to the outside, so as to heat up the fluid circulating in the tube, this exchanger further comprising at least one second tube (2) of circular or slightly ovalized section, helically wound and through which also a fluid to be heated up flows, the pitch (P2) of which is equal to that (P1) of the first tube, but for which the winding diameter is greater than that (Δ1) of the first tube, the helical winding which forms this second tube (2) being positioned concentrically around the helical winding which forms the first tube (1), but with a shift of a half-pitch in the axial direction (X-X'), these tubes (1, 2) being made in a good heat conducting metal, said casing (6) being provided with a sleeve (7) for discharging the cooled gases which have crossed the turns of each winding, **characterized by** the fact that said tubes have a configuration such that:
- the minimum distance b between both tubes (1, 2) is constant with a value of less than or equal to half a1;
- the width a2 of the interstice separating the turns of the second tube (2) is equal to 2b, or less than this value.

2. The condensing heat exchanger according to claim 1, **characterized by** the fact that the values of the interstices a1 and a2 and of the distance b are determined so that the gas passage speed is substantially constant in the passage areas with reduced section, between the turns of the first tube (1), in the interval separating both tubes, and then between the turns of the second tube (2), in spite of the lowering of temperature which they undergo upon crossing the double winding of tubes, from the inside to the outside.

3. The condensing heat exchanger according to claim 1 or 2, **characterized by** the fact that it includes at least one third tube (3) of circular or slightly ovalized section, helically wound, through which also a fluid to be heated up flows, the pitch (P3) of which is equal to that of the first and second tubes, but the winding diameter of which is slightly larger than that (Δ2) of the second tube, the helical winding which forms the third tube (3) being concentrically positioned around the helical winding which forms the second tube (2), but with a shift of a half-pitch in axial direction (X-X') relatively to the latter, and that the minimum distance c between the second and third tubes (2, 3) is constant, with a value equal to or less than half a2, while the width a3 of the interstice separating the turns of the third tube (3) is equal to 2c or less than this value.

4. The condensing heat exchanger according to claim 3, **characterized by** the fact that the values of the interstices a2 and a3 and of the distance c are determined so that the gas passage speed is substantially constant in the passage areas of reduced section, between the turns of the second tube (2), in the interval separating the second and third tubes (2, 3), and then between the turns of the third tube (3), in spite of the lowering of temperature which they undergo upon crossing the windings of tubes, from the inside to the outside.

5. The condensing heat exchanger according to one of the preceding claims, **characterized by** the fact that it includes calibration means capable of maintaining constant and at predefined values the interstices between the turns of a same tube and the minimum spacings between two neighboring tubes.

6. The condensing heat exchanger according to claim 5, **characterized by** the fact that said calibration means are bosses (10, 20; 11, 21) stamped into the wall of the tubes (1, 2) and protruding outwards.

7. The condensing heat exchanger according to claim 6, **characterized by** the fact that each tube (1, 2) is provided with at least two series of bosses (10, 20; 11, 21) regularly distributed over the whole of their length, one of series of bosses (10, 20) being adapted for calibrating the distance between its turns and the other one (11, 21) for calibrating its spacing relatively to a neighboring tube.

8. The condensing heat exchanger according to claim 6 or 7, **characterized by** the fact that said bosses have the shape of a spherical cap able to come into a quasi point-like contact against the external wall of an adjacent turn or of a neighboring tube.

9. The condensing heat exchanger according to one of the preceding claims, **characterized by** the fact that the constitutive tubes of the various windings are connected to each other via bent pipings (9; 9A, 9B), and are connected in series, the fluid to be heated up entering the outer tube (2; 3) so as to be preheated therein, and flowing out through the inner tube (1).

10. The condensing heat exchanger according to one of the preceding claims, **characterized by** the fact that said tubes have a circular section, the diameter of which slightly increases from the inside to the outside, the section of the first tube (1) having a diameter (Δ1) smaller than that (D2) of the section of the second tube (2), this diameter (D2) being itself smaller than that (D3) of the section of the third tube (3), if required.

11. The condensing heat exchanger according to one of claims 1 to 9, **characterized by** the fact that the first tube (1') has a circular section, while the second tube (2') and, if required, the third tube (3') have slightly ovalized, substantially elliptical sections obtained by shaping from a tube with a circular section of the same diameter as the first tube (3') , and for which the major axis is parallel to the axis (X-X') of the windings, the ovalization of the third tube (3'), if there is one, being more pronounced than that of the second tube (2').
